Europäisches Patentamt

European Patent Office

Office européen des brevets

(19)

(11) **EP 0 927 944 A1**

(12) ## DEMANDE DE BREVET EUROPEEN

(43) Date de publication:
07.07.1999 Bulletin 1999/27

(51) Int. Cl.⁶: **G06F 17/60**

(21) Numéro de dépôt: 98403302.7

(22) Date de dépôt: 24.12.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 30.12.1997 FR 9716712

(71) Demandeur: ELF ANTAR FRANCE
92400 Courbevoie (FR)

(72) Inventeurs:
• Valentin, Patrick
38780 Eyzin-Pinet (FR)
• Armand, Paul
87430 Verneuil sur Vienne (FR)
• Malivert, Christian
87100 Limoges (FR)

(74) Mandataire: Boillot, Marc
ELF AQUITAINE,
Division Propriété Industrielle,
Tour Elf
92078 Paris la Défense Cédex 45 (FR)

(54) **Procédé de fabrication d'un mélange de produits comportant une étape de formulation optimale**

(57)     La présente invention concerne un procédé de fabrication optimale d'un mélange de produits.

Le procédé de l'invention comporte une étape de formulation optimale qui consiste essentiellement à choisir au moins deux critères d'optimisation du mélange, à sélectionner une solution préférée dans l'ensemble des solutions efficientes et à calculer une formulation optimale.

Le procédé de l'invention permet de trouver une solution au problème de la formulation optimale, qui assure un compromis réel entre les valeurs des deux critères d'optimisation.

Il trouve son application dans les industries chimiques, les unités de fabrication de lubrifiants, les industries agro-alimentaires, dans les raffineries de pétrole et les dépôts de produits pétroliers notamment pour la fabrication de carburants et de combustibles.

FIG.3

**Description**

**DOMAINE TECHNIQUE**

La présente invention concerne un procédé de fabrication optimale d'un mélange ou d'une suite de mélanges de produits liquides, pâteux ou pulvérulents à partir d'une pluralité de produits appelés bases.

Il trouve son application dans les industries chimiques, les unités de fabrication de lubrifiants, les industries agro-alimentaires, dans les raffineries de pétrole et les dépôts de produits pétroliers notamment pour la fabrication de carburants et de combustibles.

**ETAT DE LA TECHNIQUE ANTERIEURE**

La fabrication d'un produit conforme à des spécifications données, par mélange de produits appelés bases de caractéristiques physico-chimiques connues, comporte une étape dite de formulation qui à pour but de déterminer les proportions de chacune des bases.

Cette fabrication doit en plus respecter des contraintes opérationnelles connues, telles que, dans le cas de produits liquides, les débits minima et maxima des pompes de transfert des bases, les quantités de bases disponibles, les volumes de creux dans les bacs de stockage du produit fabriqué.

Pour un produit donné à fabriquer, on dispose en général d'un simulateur ou d'un modèle qui permet, à partir des caractéristiques connues par mesure des bases et de formulations empiriques, de vérifier que les caractéristiques du futur mélange seront acceptables.

Dans le cas où l'on doit fabriquer plusieurs mélanges à la suite les uns des autres, il convient également de vérifier que les quantités des bases disponibles permettront d'effectuer la totalité des mélanges.

Ces procédés de simulation et de modélisation sont longs à mettre en oeuvre et n'optimisent aucun critère.

Un autre procédé connu utilisant les techniques de programmation linéaire permet d'optimiser le coût de fabrication d'un mélange quand les coûts des bases sont connus. Ce procédé est généralement utilisé pour établir des programmes mensuels de fabrication, il ne prend pas en compte les contraintes journalières d'exploitation des usines.

Un autre procédé connu permet de maximiser la flexibilité, c'est à dire la possibilité de réaliser de futurs mélanges dont on ne peut pas prévoir les spécifications ou la demande. Ce procédé présente l'inconvénient de ne pas prendre en compte le coût de réalisation de chaque mélange, ni celui d'une suite de mélanges.

En appliquant un autre procédé connu il est possible de prendre en compte plusieurs critères, par exemple un critère de coût C1 et un critère de flexibilité C2.

Ce procédé consiste à :

- affecter un poids à chaque critère soit a au critère C1 et b au critère C2,
- minimiser le critère pondéré aC1 - b C2,
- rechercher les valeurs des variables de la formulation qui minimisent le critère pondéré.

Ce procédé est difficile à mettre en oeuvre pour les raisons suivantes :

- il oblige l'utilisateur à fixer la valeur des poids affectés aux critères par tâtonnements. En procédant ainsi on constate la plupart du temps que l'on optimise soit l'un ou soit l'autre critère et il est très difficile de trouver une solution qui réalise un compromis acceptable entre les deux critères,
- il est long et fastidieux à mettre en oeuvre et n'est pas automatisable.

**EXPOSE DE L'INVENTION**

La présente invention a justement pour objet de remédier à ces inconvénients et notamment de fournir un procédé de fabrication d'un mélange ou d'une suite de mélanges de produits liquides, pâteux ou pulvérulents à partir de bases dont les caractéristiques sont connues, dont les formulations sont optimisées.

Il trouve son application dans toutes les industries qui fabriquent des produits par mélange de produits de base, dont notamment l'industrie pétrolière pour la fabrication des carburants et des combustibles.

A cette fin la présente invention propose un procédé de fabrication d'un mélange de produits comportant une étape de formulation optimale à partir d'un modèle du mélange, qui consiste à exécuter les opérations suivantes :

- choisir au moins un premier et un deuxième critère élémentaires d'optimisation,
- déterminer un intervalle de variation pour chacun des premier et deuxième critères élémentaires d'optimisation, chaque intervalle étant défini par les valeurs extrêmes du critère considéré, calculées au moyen du modèle du mélange et d'un algorithme d'optimisation,
- définir une pluralité de points dans l'intervalle de variation du premier critère élémentaire d'optimisation ainsi déterminé,
- calculer pour lesdits points, au moyen du modèle du mélange et d'un algorithme d'optimisation, les valeurs optimales du deuxième critère élémentaire d'optimisation, qui sont des éléments de l'ensemble des solutions efficientes, ainsi que les sensibilités dudit critère aux dits points,
- sélectionner parmi l'ensemble des solutions efficientes une solution préférée correspondant à un compromis prédéterminé entre les deux critères élémentaires d'optimisation,
- calculer une formulation optimale correspondant à ladite solution préférée.

Selon une autre caractéristique du procédé de l'invention la solution préférée est sélectionnée en choisissant un point parmi la pluralité de points définis dans l'intervalle de variation du premier critère d'optimisation.

Selon une autre caractéristique du procédé de l'invention, la sélection de la solution préférée dans l'ensemble des solutions efficientes consiste à calculer la valeur du deuxième critère élémentaire d'optimisation à partir d'une valeur du premier critère élémentaire d'optimisation choisie par interpolation entre deux points consécutifs de la pluralité de points définis dans l'intervalle de variation dudit critère.

Selon une autre caractéristique du procédé de l'invention, la sélection de la solution préférée dans l'ensemble des solutions efficientes consiste à choisir la solution pour laquelle la variation de sensibilité du deuxième critère d'optimisation est maximale.

Selon une autre caractéristique du procédé de l'invention, la sélection de la solution préférée dans l'ensemble des solutions efficientes consiste à élaborer un critère pondéré d'optimisation avec les premier et deuxième critères d'optimisation affectés de poids libres puis à rechercher la solution qui optimise ledit critère pondéré d'optimisation.

Selon une autre caractéristique du procédé de l'invention, la sélection de la solution préférée dans l'ensemble des solutions efficientes consiste à élaborer un critère pondéré d'optimisation avec les premier et deuxième critères d'optimisation affectés de poids libres respectivement égaux à a et b puis à fixer des valeurs aux poids libres telles que le rapport b sur a soit égal à la valeur du quotient de l'intervalle de variation du deuxième critère d'optimisation par l'intervalle de variation du premier critère élémentaire d'optimisation puis à rechercher la solution correspondante.

Selon une autre caractéristique du procédé de l'invention le premier critère élémentaire d'optimisation est un critère de coût et le deuxième critère élémentaire d'optimisation est un critère de flexibilité.

Selon une autre caractéristique le procédé de l'invention est utilisé pour fabriquer un carburant.

Selon une dernière caractéristique le procédé de l'invention est utilisé pour fabriquer un suite de mélanges.

## BREVE DESCRIPTION DES DESSINS

L'invention sera mieux comprise à l'aide de la description qui suit, d'un mode de réalisation donné à titre d'exemple et en référence aux dessins annexés dans lesquels :

- la figure 1 est un diagramme qui représente le domaine d'évolution des deux critères élémentaires d'optimisation.
- la figure 2 représente graphiquement la pluralité de points définis dans l'intervalle de variation du premier critère élémentaire d'optimisation et les éléments correspondants de l'ensemble des solutions efficientes
- la figure 3 représente l'ensemble des solutions efficientes dans l'espace (C2,C1) d'un mélange de peintures.
- La figure 4 représente l'ensemble chiffré des solutions efficientes dans l'espace (C2,C1) d'un mélange de mélange de peintures.
- La figure 5 représente l'ensemble chiffré des solutions efficientes dans l'espace (C2,C1) d'un mélange de mélange de carburants.

## EXPOSE DETAILLE DE L'INVENTION

D'une manière générale le procédé de l'invention est utilisé pour fabriquer des mélanges de produits en prenant en compte au moins deux critères d'optimisation.

Le procédé de l'invention permet de trouver une solution au problème de la formulation optimale, qui assure un compromis réel entre les valeurs d'au moins deux critères d'optimisation, donc intermédiaire entre les solutions extrêmes.

Pour la formulation d'un mélange le procédé de l'invention consiste dans une première étape à choisir :

- un premier critère élémentaire d'optimisation, par exemple un critère de coût de fabrication du mélange, le coût des bases étant connu,
- un deuxième critère élémentaire d'optimisation, par exemple un critère de flexibilité qui représente la possibilité de réaliser ultérieurement les mélanges les plus divers à partir des bases disponibles.

Puis à déterminer un intervalle de variation pour les critères élémentaires d'optimisation C1 et C2. Dans le cas considéré on cherche la valeur minimale de C1 soit C1min qui correspond au coût minimal de fabrication du mélange et la valeur maximale de C2 soit C2max qui correspond à la flexibilité maximale, en calculant les formulations qui correspondent à ces extrêmes au moyen du modèle du mélange qui représente la relation mathématique entre les caractéristiques des bases et celles du mélange.

A la valeur C1min correspond une solution qui permet de calculer une valeur C2min du critère C2 et à la valeur C2max correspond une valeur C1max du critère C1.

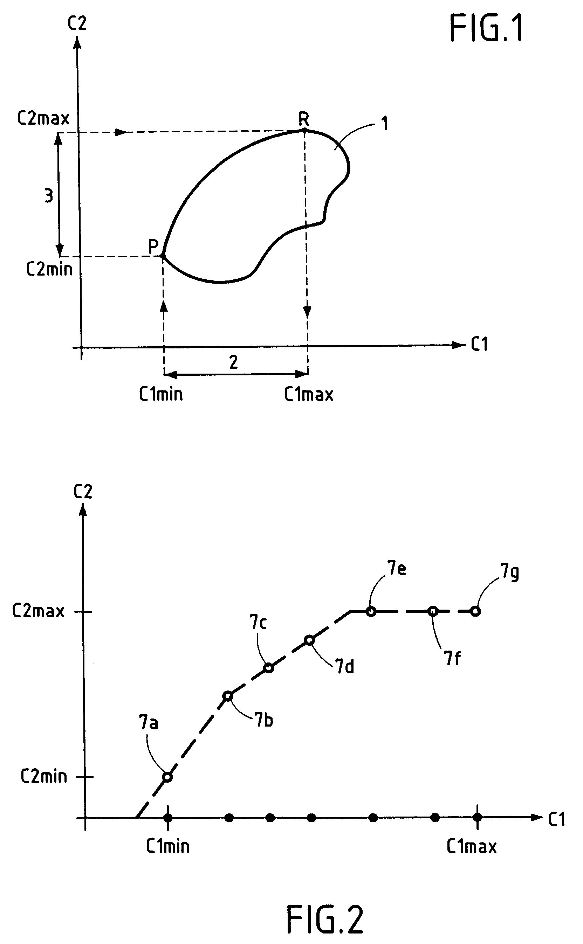

La figure 1 illustre sous forme graphique les relations entre ces différentes valeurs. La surface circonscrite par la courbe 1 représente les valeurs de C2 en fonction de celles de C1. La valeur minimale de C1 correspond à l'abscisse du point P, déterminée au moyen du modèle et l'ordonnée du point P correspond à la valeur C2min. La valeur maximale de C2 correspond à l'ordonnée du point R et l'abscisse de ce point R correspond à la valeur C1max. L'intervalle de variation du critère C1 est l'intervalle 2 compris entre les valeurs C1min et C1max. L'intervalle de variation du critère C2 est l'intervalle 3 compris entre les valeurs C2min et C2max.

On définit ensuite sur l'intervalle de variation de C1 une pluralité de points, par exemple 7, répartis arbitrairement pour couvrir la totalité de l'intervalle 2.

Cette pluralité de points est représentée sur la figure 2 par les points 6a à 6g. Pour chacun de ces points 6a à 6g, qui correspondent à des valeurs de C1, on calcule les valeurs maximales de C2 et les sensibilités correspondantes au moyen du modèle du mélange et d'un algorithme d'optimisation. Si on porte sur le diagramme de la figure 2 les points d'abscisses égales à celles des points 6a à 6g et d'ordonnées égales aux valeurs maximales correspondantes de C2 on obtient la pluralité de points 7a à 7g, qui sont des éléments de l'ensemble des solutions efficientes.

La sensibilité en un des points 7a à 7g est égale par définition à la pente p de la courbe 4 obtenue en joignant les points 7a à 7g. Cette courbe 4 est une approximation de l'ensemble des solutions efficientes. A une variation donnée $\Delta C1$ correspond une variation $\Delta C2$, telle que $\Delta C2 = p.\Delta C1$ .

Une pente p élevée en un point de la courbe 4 signifie qu'en ce point, pour une variation faible du coût de fabrication on peut obtenir une forte augmentation de la flexibilité.

Inversement dans les zones de faible pente de la courbe C1 une augmentation importante du coût de fabrication n'entraîne qu'une faible augmentation de la flexibilité.

Pour sélectionner la solution préférée c'est à dire la solution considérée par le fabricant du mélange comme le meilleur compromis entre le coût de fabrication et la flexibilité, on fixe une valeur à C1 en choisissant un des points parmi la suite 6a à 6g.

L'ordonnée du point choisi donne la valeur de C2.

Un des avantages du procédé de l'invention est son caractère automatisable qui élimine les tâtonnements. De plus après calcul des coordonnées des points 7a à 7g la courbe 4 peut être visualisée sur un écran. Ainsi l'opérateur qui doit réaliser le mélange dispose d'un moyen extrêmement efficace pour choisir le compromis entre les deux critères élémentaires d'optimisation qu'il considère comme le meilleur compte tenu des contraintes de fabrication du moment et des futurs mélanges dont il a connaissance.

EXEMPLE 1

Le mélange pour lequel une formulation optimale est recherchée est un mélange de peintures de volume et de couleur donnés, à réaliser à partir de trois bases de couleurs connues disponibles dans des quantités connues. Dans la description qui va suivre les données et variables qui seront utilisées sont définies comme suit :

*Données et variables relatives aux bases :

- j est une variable indicielle qui varie de 1 à 3,
- Bj représente les bases disponibles,
- Vjo représente le volume initial disponible de la base Bj,
- Dj représente le coût de la base Bj par unité de volume,
- Rj représente l'indice de couleur de la base Bj,

*Données relatives au mélange à réaliser :

- Vm représente le volume du mélange à réaliser,
- Rm représente l'indice de couleur du mélange à réaliser,
- Vj représente le volume de la base Bj, utilisé pour réaliser le mélange.

Le but du procédé de l'invention est de trouver une formulation qui assure un compromis réel entre les valeurs d'un premier et d'un deuxième critère élémentaires d'optimisation qu'on appelle respectivement C1 et C2 et qui sont définis comme suit :

- C1 est un critère de coût de fabrication du mélange défini par la formule suivante :

$$C1 = \sum_{j} Vj.Dj$$

C1 est égal à la somme des coûts des bases utilisées
- C2 est un critère de flexibilité défini par la formules suivante :

$$C2 = [\sum_{1 \leq i < j \leq 3} (Vjo-Vj)(Vio-Vi) \begin{vmatrix} 1 & R_j \\ 1 & R_i \end{vmatrix}]^{1/2}$$

La relation $1 \leq i < j \leq 3$ traduit le fait qu'on ne mélange que deux bases entre elles pour obtenir une couleur donnée.

Le symbole | | signifie : valeur absolue du déterminant.

En développant cette formule on obtient :

$$C2 = [(V1o-V1)(V2o-V2)|R2-R1| +(V1o-V1)(V3o-V3)|R3-R1| +(V2o-V2)(V3o-V3)|R3-R1|]^{1/2}$$

Dans le présent exemple le modèle du mélange est la relation mathématique qui relie l'indice de couleur Rm du mélange aux indices de couleur Rj des bases.

On a choisi le modèle linéaire suivant :

$$Vm.Rm = \sum_{j} Vj.Rj \text{ et } Vm = \sum_{j} Vj$$

Avec ce modèle et ces critères les solutions aux problèmes d'optimisation qui devront être résolus dans les étapes suivantes, sont toutes uniques.

L'étape suivante du procédé de l'invention consiste à déterminer les intervalles de variations de C1 et C2.

Pour cela, comme on cherche à minimiser le coût du mélange et à maximiser la flexibilité pour se ménager la possibilité de réaliser d'autres mélanges dans les meilleures conditions, on recherche la valeur minimale de C1 qu'on appellera C1min puis la valeur maximale de C2 qu'on appellera C2max.

Pour calculer C1min on cherche tout d'abord, au moyen d'un programme d'optimisation linéaire mettant en oeuvre la méthode dite du Simplex, les valeurs de V1, V2, V3 qui résolvent l'équation min C1 (V1,V2,V3) sous les trois contraintes suivantes :

1- L'indice de couleur du mélange Rm doit être compris entre les valeurs maximales et minimales des indices de couleur des bases Rj :

$$R\ \min \leq R_m = \left(\sum_j V_j . R_j\right)\Big/ V_m) \leq R\ \max$$

Rmin représente la valeur minimale de Rm
Rmax représente la valeur maximale de Rm

2- Le volume du mélange est égal à la somme des volumes des bases utilisées :

$$V_m = \sum_j V_j$$

3- Le volume utilisé de chaque base doit être compris entre zéro et le volume initial de chaque base :

$$0 \leq V_j \leq V_{jo}$$

Vjo représente le volume initial disponible de la base Bj.

Le programme linéaire d'optimisation donne les solutions V*1, V*2, V*3. Avec ces valeurs on calcule la valeur C1min de C1 et la valeur correspondante C2min de C2 soit :

$$C1min = V^*_1\ D1 + V^*_2\ D2 + V^*_3\ D3$$

$$C2min = [(V1o-V^*1)(V2o-V^*2)|R2-R1| +(V1o-V^*1)(V3o-V^*3)|R3-R1| +(V2o-V^*1)(V3o-V^*3)|R3-R1|]^{1/2}$$

Pour calculer C2max on cherche tout d'abord, au moyen de la méthode de programmation non linéaire SQP (Sequential Quadratique Programming), les valeurs de V1, V2, V3 qui résolvent l'équation max C2 (V1,V2,V3) sous les trois contraintes exprimées ci-dessus.
Soit V°1, V°2, V°3 les solutions données par le programme d'optimisation non linéaire avec lesquelles on calcule C2max et C1max.

$$C2max = [(V1o-V°1)(V2o-V°2)|R2-R1| +(V1o-V°1)(V3o-V°3)|R3-R1| +(V2o-V°2)(V3o-V°3)|R3-R1|]^{1/2}$$

$$C1max = V°1.D1 + V°2\ D2 + V°3\ D3$$

Les intervalles de variation de C1 et C2 sont :

Intervalle C1 : [C1min , C1max]
Intervalle C2 : [C2min , C2max]

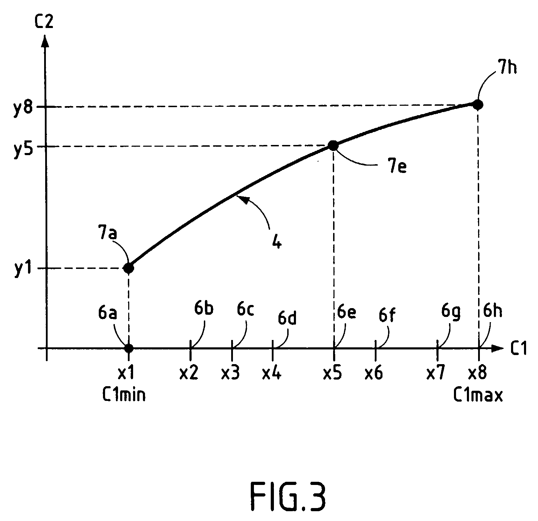

C1min, C1max, C2min, C2max ayant les valeurs calculées précédemment.
On définit ensuite 8 points sur l'intervalle de variation de C1 dont les extrémités de manière à déterminer sensiblement 7 intervalles égaux à (C1max - C2min)/7.
Ces points sont repérés 6a, 6b, 6c, 6d, 6e, 6f, 6g et 6h, sur l'axe C1 du graphique de la figure 3, ils ont pour abscisses respectives les valeurs xi avec i=1 à 8.
A partir de chacune des valeurs xi du critère C1, on calcule la valeur correspondante de max C2(V1,V2,V3), par programmation non linéaire sous les trois contraintes exprimées ci-dessus plus une quatrième :

$$xi = \sum_j D_j . V_j$$

Pour chaque point d'abscisse xi le programme d'optimisation non linéaire donne les solutions V*1i, V*2i,V*3i ainsi que la valeur de la sensibilité de C2 au point d'abscisse considéré.

A partir de ces solutions on calcule les valeurs correspondantes de C2, soit yi

$$yi = [(V1o\text{-}V*1i)(V2o\text{-}V*2i)|R2\text{-}R1| + (V1o\text{-}V*1i)(V3o\text{-}V*3i)|R3\text{-}R1| + (V2o\text{-}V*2i)(V3o\text{-}V*3i)|R3\text{-}R2|]^{1/2}$$

Remarque : la valeur de C2 pour x8 soit y8 a été calculée précédemment, elle est égale à C2max.

Sur la figure 3 sont représentés les points 7a, 7b, 7c, 7d, 7e, 7f, 7g et 7h, dont les coordonnées sont (x1,y1), (x2,y2), (x3,y3), (x4,y4), (x5,y5), (x6,y6), (x7,y7) et (x8,y8).

On a également tracée sur la figure 3 la courbe 4 qui passe par les points 7a à 7h qui représente l'ensemble des solutions efficientes.

La pente en un point de la courbe 4 représente la sensibilité du critère C2 par rapport aux variations du critère C1 en ce point. Les valeurs des pentes aux points 7a à 7h sont données par le multiplicateur de Lagrange, lui même calculé par le programme d'optimisation non linéaire en même temps que les solutions.

On désigne ces pentes par p1, p2 à p8 pour les points respectivement 7a à 7h.

Pour terminer on sélectionne la solution préférée, c'est à dire celle qui réalise le meilleur compromis entre les valeurs du critère de coût C1 et du critère ce flexibilité C2 prédéterminée en fonction des besoins de la production.

Pour cela on recherche automatiquement le point de la courbe 4 pour lequel la variation de sensibilité est maximale, au moyen d'un algorithme qui calcule le maximum de la fonction

$$|p_i - p_{i-1}| \text{ avec } i = 2 \text{ à } 8$$

Soit k la valeur de i ainsi déterminée. On calcule p* avec cette valeur de k, par la formule

$$p^* = \frac{1}{2} (pk + pk{+}1).$$

On résout le problème d'optimisation min p*.C1 - C2 par un programme non linéaire avec les contraintes suivantes :

$$Vm = \sum_j Vj$$

$$Rm = \frac{1}{Vm} \sum_j Rj.Vj$$

$$0 \leq Vj \leq Vjo$$

La solution est atteinte pour les valeurs V*1p V*2p et V*3p, qui constituent la solution préférée.

Avec ces valeurs on calcule les valeurs optimales des critères au compromis :

$$\text{soit } C1^* = C1(V*1p, V*2p, V*3p) \text{ et } C2^* = C2(V*1p, V*2p, V*3p)$$

La formulation optimale du mélange de volume Vm de couleur Rm est la suivante :

Volume de la base B1 : V*1p
Volume de la base B2 : V*2p
Volume de la base B3 : V*3p

Une autre manière particulièrement intéressante pour sélectionner la solution préférée consiste :

- à élaborer un critère z pondéré d'optimisation sous la forme de l'expression suivante :

$$z = aC1 + bC2$$

dans laquelle :

. C1 représente le premier critère élémentaire d'optimisation c'est à dire le critère de coût de fabrication,
. C2 représente le deuxième critère élémentaire d'optimisation c'est à dire le critère de flexibilité.
. a représente le poids affecté au critère C1 dans le critère pondéré z,
. b représente le poids affecté au critère C2 dans le critère pondéré z.

On choisit b = -1 et

$$a = \frac{C2\ max - C2\ min}{C1\ max - C1\ min}$$

a représente la sensibilité moyenne.
- à chercher au moyen d'une méthode de programmation non linéaire les valeurs de V1, V2, V3 qui résolvent l'équation : min z
sous les trois contraintes exprimées précédemment et rappelées ci-après :

1)

$$R\ min \leq Rm = \sum_{j} Vj.Rj/Vm \leq R\ max$$

2)

$$Vm = \sum_{j} Vj$$

3) $0 \leq Vj \leq Vjo$

Les différents termes ayant la même signification que précédemment.

Les valeurs de V1, V2, V3 ainsi déterminées constituent la solution préférée.

Ainsi pour fabriquer un mélange de peinture grise de volume Vm = 500 m3 d'indice de couleur Rm = 50, à partir de trois bases de couleurs respectivement noire, blanche et grise dont les données et caractéristiques sont les suivantes :

TABLEAU 1

| BASES | | | | |
|---|---|---|---|---|
| Couleur | Indice : j | Volume disponible : Vjo en m3 | Coût : Dj en francs | Indice de couleur : Rj |
| Noire | 1 | 500 | 95 | 1 |
| Blanche | 2 | 500 | 105 | 99 |
| Grise | 3 | 500 | 101 | 50 |

les intervalles de variation de C1 et de C2 sont les suivants :

Intervalle C1 : [C1min = 50 000 F, C1max = 50 500 F]

Intervalle C2 : [C2min = 4,2866, C2max = 4,9497]

Les résultats des calculs d'optimisation sont les suivants :

TABLEAU 2

| Points sur Intervalle C1 | | Solutions efficientes | | |
|---|---|---|---|---|
| Repères | Abscisses xi | Repères | Ordonnées yi | Sensibilités pi |
| 6a | 50 000 | 7a | 4,2866 | 0,002597 |
| 6b | 50 071 | 7b | 4,4721 | 0,002347 |
| 6c | 50 142 | 7c | 4,6233 | 0,001892 |
| 6d | 50 214 | 7d | 4,7434 | 0,001475 |
| 6$^e$ | 50 285 | 7e | 4,8347 | 0,001085 |
| 6f | 50 357 | 7f | 4,8989 | 0,000714 |
| 6g | 50 428 | 7g | 4,9371 | 0,000354 |
| 6h | 50 500 | 7h | 4,9497 | 0,000000 |

Remarque : dans cet exemple, on choisit Rm = Rmin = Rmax traduisant le fait que l'on veut fabriquer un mélange dont l'indice de couleur est détermine. Si on voulait fabriquer un mélange dont l'indice de couleur serait compris entre les deux valeurs Rmin et Rmax, il suffirait de remplacer la contrainte d'égalité par deux contraintes d'inégalité.

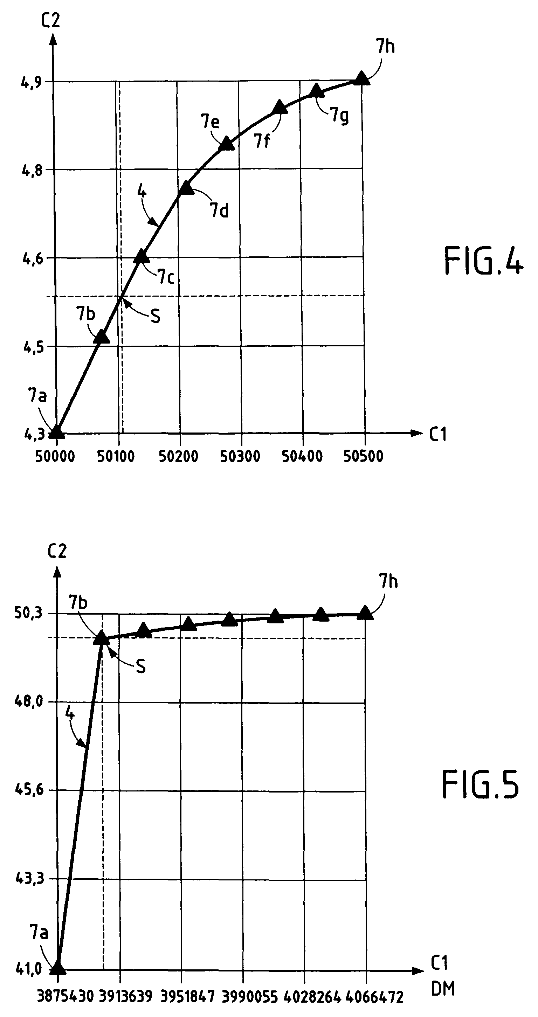

Les valeurs xi et yi du Tableau 2 sont les coordonnées des points Ta à 7h représentés sur la figure 4. Sur cette figure 4 l'axe des abscisses représente les valeurs du critère C1 et l'axe des ordonnées les valeurs du critère C2. La courbe 4 obtenue en joignant les points 7a à 7h représente l'ensemble des solutions efficientes.

La solution préférée qui réalise le meilleur compromis entre les valeurs du critère de coût C1 et du critère de flexibilité C2, sélectionnée en recherchant le point de la courbe 4 pour lequel la variation de sensibilité est maximale correspond à :

C1* = 50 106 francs et C2* = 4,5498 point repéré S sur la courbe 4.
la sensibilité p* pour ces valeurs de C1 et C2 étant égale à 0,002120.

La formulation optimale du mélange est :

Volume de peinture noire :        197 m3 soit 39,37% de Vm
Volume de peinture blanche :      197 m3 soit 39,37% de Vm
Volume de peinture grise :        106 m3 soit 21,25% de Vm

pour fabriquer 500 m3 d'un mélange dont l'indice de couleur est égal à 50.

EXEMPLE 2

Le mélange à fabriquer pour lequel une formulation optimale est recherchée est un carburant dont les caractéristiques doivent être conformes à des spécifications commerciales. Pour réaliser ce mélange on dispose dans des bacs de stockage de sept bases en quantités connues dont les caractéristiques physiques et physico-chimiques ont été mesurées à partir d'échantillons prélevés dans les bacs de stockage et/ou au moyen d'analyseurs en ligne pendant leur fabrication.

Dans la description qui va suivre les données et variables qui seront utilisées sont définies comme suit :

* Données et variables relatives aux bases :

-    j est une variable indicielle qui varie de 1 à 7,
-    Bj représente les bases disponibles,

- Vjo représente le volume initial disponible de la base Bj,
- Dj représente le coût de la base Bj par unité de volume,
- Rij représente la caractéristique i de la base Bj, i variant de 1 à 6
- TK18, TK19, TK21 et TK04 sont des repères de bacs de stockage des bases B1,B2,B3 et B4
- Ref, FCC, Butane caractérisent l'origine des bases B5, B6 et B7

\* Données relatives au mélange à réaliser :

- Vm représente le volume du mélange à réaliser,
- Rim représente la caractéristique i du mélange à réaliser i variant de 1 à 6,
- Vj représente le volume de la base Bj, utilisé pour réaliser le mélange.

\* Caractéristiques des bases et du mélange

- MV signifie masse volumique
- RON signifie indice d'octane recherche
- MON signifie indice d'octane moteur
- RVP signifie tension de vapeur
- %D 70 ° signifie pour-cent distillé à 70°C
- %D 100° signifie pour-cent distillé à 100°C

Le but du procédé de l'invention est de fabriquer un mélange selon une formulation qui assure un compromis réel entre les valeurs optimales de deux critères élémentaires d'optimisation qu'on appelle respectivement C1 et C2 et qui sont définis comme suit :

- C1 est un critère de coût de fabrication du mélange défini par la formule suivante :

$$C1 = \sum_{j} Vj.Dj$$

qui exprime que C1 est égal à la somme des coûts des bases utilisées
- C2 est un critère de flexibilité basé sur le volume, le RON et le RVP, défini par la formules suivante :

$$C2 = \left[ \sum_{1<i<j<k<7} (Vio-Vi)(Vjo-Vj)(Vko-Vk) \begin{vmatrix} 1 & RONi & RVPi \\ 1 & RONj & RVPj \\ 1 & RONk & RVPk \end{vmatrix} \right]^{1/3}$$

Dans laquelle i,j et k sont les indices des bases qui varient de 1 à 7.
Vio, Vjo et Vko sont les volumes initiaux disponibles respectivement des bases i, j et k.
Dans le présent exemple le modèle linéaire du mélange est la relation mathématique qui relie les caractéristiques Rim du mélange aux caractéristiques Rij des bases ou à des indices représentatifs de ces caractéristiques.

TABLEAU 3

| Bases Bj | | | Caractéristiques des bases Rij | | |
|---|---|---|---|---|---|
| Indice : j | Origine | Volume disponible Vjo en m3 | MV : R1j t/m3 | RON : R2j | MON : R3j |
| 1 | TK18 | 8 000 | 0,713 | 95,8 | 93,1 |
| 2 | TK19 | 2 500 | 0,769 | 95,0 | 85,0 |
| 3 | TK21 | 3 000 | 0,746 | 118 | 101 |
| 4 | TK04 | 5 000 | 0,649 | 70,4 | 69,3 |
| 5 | Ref | 21 700 | 0,815 | 102 | 92,6 |
| 6 | FCC | 37 500 | 0,741 | 92,7 | 81,3 |
| 7 | Butane | 3 000 | 0,584 | 97,1 | 88,3 |

TABLEAU 4

| Bases | | | Caractéristiques des bases Rij | | |
|---|---|---|---|---|---|
| Indice : j | Origine | Volume disponible | RVP : R4j Bar en | %D 70° : R5j | %D 100° : R6j |
| 1 | TK18 | 8 000 | 0,4 | 10 | 50 |
| 2 | TK19 | 2 500 | 0,83 | 20 | 48 |
| 3 | TK21 | 3 000 | 0,53 | 100 | 100 |
| 4 | TK04 | 5 000 | 0,94 | 95 | 100 |
| 5 | Ref | 21 700 | 0,25 | 6 | 31 |
| 6 | FCC | 37 500 | 0,7 | 30 | 45 |
| 7 | Butane | 3 000 | 4,73 | 100 | 100 |

TABLEAU 5

| Bases | | |
|---|---|---|
| Indice : j | Origine | Coût en DM |
| 1 | TK18 | 359 |
| 2 | TK19 | 239 |
| 3 | TK21 | 499 |
| 4 | TK04 | 303 |
| 5 | Ref | 331 |
| 6 | FCC | 318 |
| 7 | Butane | 225 |

TABLEAU 6

| Caractéristiques du mélange carburant à formuler | | | | |
|---|---|---|---|---|
| | Volume en m3 | MV en t/m3 R1m | RON R2m | MON R3m |
| Valeur minimale | 12 541 | 0,726 | 91,6 | 83,1 |
| Valeur maximale | 12 541 | 0,779 | 93 | 86 |

TABLEAU 7

| Caractéristiques du mélange à formuler (suite) | | | | |
|---|---|---|---|---|
| | Volume en m3 | RVP en Bar R4m | %D 70° R5m | %D 100° R6m |
| Valeur minimale | 12 541 | 0,46 | 15 | 40 |
| Valeur maximale | 12 541 | 0,68 | 42 | 65 |

En déroulant les différentes étapes du procédé de l'invention on obtient les résultats suivants :

Les intervalles de variation de C1 et C2 sont les suivants:

Intervalle C1 : [3 875 430 , 4 066 472]
Intervalle C2 : [41,0 , 50,3]

La courbe 4 de la figure 5 représente l'ensemble des solutions efficientes dans l'espace C1, C2.

La formulation optimale et les caractéristiques du mélange formulé qui correspondent à la solution préférée, c'est à dire celle qui réalise le meilleur compromis entre les valeurs des deux critères d'optimisation, sont données ci-après dans les tableaux 8 et 9.

Sur la figure 5 le point S correspond à la solution préférée pour laquelle la variation de sensibilité du critère C2 par rapport au critère C1 est maximale.

En considérant la figure 5 on constate que entre les point 7a et 7b à une faible variation du critère de coût C1 correspond une très forte augmentation de la valeur du critère de flexibilité C2. Inversement entre les points 7b et 7h, à une forte augmentation du coût correspond une très faible augmentation de la valeur du critère de flexibilité.

TABLEAU 8

| Bases | | Formulation optimale du mélange | |
|---|---|---|---|
| Indice : j | Origine | Volume de la base j en %Vm | Volume de la base j en m3 |
| 1 | TK18 | 13,65 | 1711,3 |
| 2 | TK19 | 10,4 | 1304 |
| 3 | TK21 | 0 | 0 |
| 4 | TK04 | 1,62 | 203,7 |
| 5 | Ref | 0 | 0 |
| 6 | FCC | 74,33 | 9322,1 |
| 7 | Butane | 0 | 0 |

TABLEAU 9

| Caractéristiques du mélange formulé | | | | | | | |
|---|---|---|---|---|---|---|---|
| Volume en m3 | Coût en MDM | MV en t/m3 | RON | MON | RVP | %D 70° | %D 100° |
| 12 541 | 3,952 | 0,7386 | 93 | 83,1 | 0,676 | 27 | 47 |

Les exemples d'application du procédé de l'invention donnés ci-dessus ne sont pas limitatifs, au contraire le procédé de l'invention peut être utilisé pour optimiser la formulation de mélanges de produits très divers tels que des poudres, des liquides ou des pâtes dans des domaines très variés de l'industrie.

Le nombre de critères d'optimisation et le nombre des caractéristiques pris en compte par le procédé de l'invention ne sont limités pas limités à deux comme dans les exemples.

Il peuvent éventuellement être limités par les programmes d'optimisation linéaires et non linéaires utilisés.

**Revendications**

1. Procédé de fabrication d'un mélange de produits comportant une étape de formulation optimale à partir d'un modèle du mélange qui consiste à :

   - choisir au moins un premier et un deuxième critère élémentaires d'optimisation,
   - déterminer un intervalle de variation pour chacun des premier et deuxième critères élémentaires d'optimisation chaque intervalle étant défini par les valeurs extrêmes du critère considéré, calculées au moyen du modèle du mélange et d'un algorithme d'optimisation,
   - définir une pluralité de points dans l'intervalle de variation du premier critère élémentaire d'optimisation ainsi déterminé,

   ledit procédé étant caractérisé en ce que ladite étape consiste à exécuter les opérations suivantes :

   - calculer pour lesdits points, au moyen du modèle du mélange et d'un algorithme d'optimisation, les valeurs optimales du deuxième critère élémentaire d'optimisation, qui sont des éléments de l'ensemble des solutions efficientes, ainsi que les sensibilités dudit critère aux dits points,
   - sélectionner parmi l'ensemble des solutions efficientes une solution préférée correspondant à un compromis prédéterminé entre les deux critères élémentaires d'optimisation,
   - calculer la formulation optimale correspondant à ladite solution préférée.

2. Procédé selon la revendication 1 caractérisé en ce que la solution préférée est sélectionnée en choisissant un point parmi la pluralité de points définis dans l'intervalle de variation du premier critère d'optimisation.

3. Procédé selon la revendication 1 caractérisé en ce que la sélection de la solution préférée dans l'ensemble des solutions efficientes consiste à calculer la valeur du deuxième critère élémentaire d'optimisation à partir d'une valeur du premier critère élémentaire d'optimisation choisie par interpolation entre deux points consécutifs de la pluralité de points définis dans l'intervalle de variation dudit critère.

4. Procédé selon la revendication 1 caractérisé en ce que la sélection de la solution préférée dans l'ensemble des solutions efficientes consiste à choisir la solution pour laquelle la variation de sensibilité du deuxième critère d'optimisation est maximale.

5. Procédé selon la revendication 1 caractérisé en ce que la sélection de la solution préférée dans l'ensemble des solutions efficientes consiste à élaborer un critère pondéré d'optimisation avec les premier et deuxième critères d'optimisation affectés de poids libres puis à rechercher la solution qui optimise ledit critère pondéré d'optimisation.

6. Procédé selon la revendication 1 caractérisé en ce que la sélection de la solution préférée dans l'ensemble des solutions efficientes consiste à élaborer un critère pondéré d'optimisation avec les premier et deuxième critères d'optimisation affectés de poids libres respectivement égaux à a et b puis à fixer des valeurs aux poids libres telles que le rapport b sur a soit égal à la valeur du quotient de l'intervalle de variation du deuxième critère d'optimisation par l'intervalle de variation du premier critère élémentaire d'optimisation puis à rechercher la solution correspondante.

7. Procédé selon une des revendications 1 à 6 caractérisé en ce que le premier critère élémentaire d'optimisation est un critère de coût et le deuxième critère élémentaire d'optimisation est un critère de flexibilité.

8. Application du procédé selon une des revendications 1 à 7 à la fabrication d'un carburant.

9. Application du procédé selon une des revendications 1 à 8 à la fabrication d'une suite de mélanges.

FIG.1

FIG.2

FIG.3

FIG.4

FIG.5

| | Office européen des brevets | RAPPORT DE RECHERCHE EUROPEENNE | Numéro de la demande EP 98 40 3302 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | NANGIA U ET AL: "Surrogate worth trade-off technique for multi-objective optimal power flows" IEE PROCEEDINGS-GENERATION, TRANSMISSION AND DISTRIBUTION, NOV. 1997, IEE, UK, vol. 144, no. 6, pages 547-553, XP002077439 ISSN 1350-2360 * page 548, colonne 1, ligne 10 - ligne 18 * | 1-4,7-9 | G06F17/60 |
| Y | * page 548, colonne 2, ligne 29 - page 549, colonne 1, ligne 10 * | 5,6 | |
| Y | HOBBS B F ET AL: "Multicriteria methods for resource planning: an experimental comparison" IEEE TRANSACTIONS ON POWER SYSTEMS, NOV. 1994, USA, vol. 9, no. 4, pages 1811-1817, XP000484604 ISSN 0885-8950 * page 1812, colonne 1, ligne 24 - colonne 2, ligne 28 * | 5,6 | |
| | | | DOMAINES TECHNIQUES RECHERCHES (Int.Cl.6) |
| | | | G06F |
| A | KERMANSHAHI B S ET AL: "Environmental marginal cost evaluation by non-inferiority surface (power systems)" IEEE TRANSACTIONS ON POWER SYSTEMS, NOV. 1990, USA, vol. 5, no. 4, pages 1151-1159, XP002077441 ISSN 0885-8950 * page 1154, colonne 2, ligne 1 - page 1155, colonne 1, ligne 21 * | 1-9 | |
| | -/-- | | |

Le présent rapport a été établi pour toutes les revendications

| Lieu de la recherche | Date d'achèvement de la recherche | Examinateur |
|---|---|---|
| LA HAYE | 6 avril 1999 | Pedersen, N |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P04C02)

**Office européen des brevets**

**RAPPORT DE RECHERCHE EUROPEENNE**

Numéro de la demande

EP 98 40 3302

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | SHIN W S ET AL: "Interactive multiple objective optimization: survey. I. Continuous case" COMPUTERS & OPERATIONS RESEARCH, 1991, UK, vol. 18, no. 1, pages 97-114, XP002077442 ISSN 0305-0548 * page 97, ligne 1 - page 98, ligne 15 * * page 104, ligne 40 - ligne 47 * | 1-9 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 6 avril 1999 | Pedersen, N |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)